# EUROPEAN PATENT SPECIFICATION

(11) **EP 1 459 002 B1**
(45) Date of publication and mention of the grant of the patent: **24.01.2007**
(21) Application number: 02791178.3
(22) Date of filing: 11.12.2002
(51) Int. Cl.: F16L 3/23, F16L 3/24

(54) **SUPPORT DEVICE TO BE USED FOR ATTACHING PIPES AND CABLES TO A VEHICLE, COMPRISING A CONSOLE DESIGNED WITH A CONVEX ENVELOPE SURFACE**
STÜTZVORRICHTUNG ZUR BEFESTIGUNG VON ROHREN UND KABELN AN EINEM FAHRZEUG MIT EINER MIT EINER KONVEXEN HÜLLFLÄCHE VERSEHENEN KONSOLE
DISPOSITIF SUPPORT

(30) Priority: 18.12.2001 SE 0104284
(43) Date of publication of application: 22.09.2004
(73) Proprietor: VOLVO LASTVAGNAR AB, 405 08 Göteborg (SE)
(72) Inventor: REGNELL, Hans, S-442 50 Ytterby (SE); JOHANSSON, Ulf, S-434 42 Kungsbacka (SE)
(74) Representative: Fröhling, Werner Otto
(86) International application number: PCT/SE2002/002294
(87) International publication number: WO 2003/058106

(56) References cited:
- EP-A1- 0 412 067
- EP-A2- 1 069 360
- FR-A- 997 405
- GB-A- 702 976

## Description

### TECHNICAL FIELD:

The present invention relates to a support device according to the preamble to claim 1.

### BACKGROUND OF THE INVENTION:

Various types of fitting support devices are available for fastening components, especially pipes, hoses and cables, to the frame of a vehicle.

Components of this type are usually fastened to support devices which are fixed to the frame of the vehicle. On heavy vehicles such as trucks or buses some form of standard support device is used for all types of fastening. This support device comprises a bent sheet-metal angle bracket which is fixed by a bolt in the frame and is provided with a number of notches through which a cable tie, for example, can be fitted in order to fasten the component in question.

These support devices have a number of disadvantages. A major problem is that they have sharp edges. When a component bears against the edge the component sustains damage due to wear. This problem is greatest in the case of components that lie approximately at right angles to the support device.

Since the support device is a standard support device it is not possible to find the optimum orientation of the support device, that is to say the angle of the support device in relation to the component, for each particular fitting. Furthermore, one and the same support device may need to be oriented at different angles depending on the vehicle type and equipment, which means that the components are often exposed to undesirable wear against the edges of the support device. Even if an angular position of the support device is predefined, this position is easily altered when the support device is tightened by means of a wrench, for example. The support device readily rotates with the bolt or the nut when it is tightened. A few degrees misalignment of the support device may be sufficient for wear against the edge to occur. It therefore becomes difficult to fit a support device with the correct orientation. The extent of the support device misalignment comes to depend on which fitter fitted it.

It is also possible for two or more components to be fitted to the same support device. These components may have different angular positions relative to one another, which means that at least one of the components will bear against the edge of the support device.

All of this contributes to unwanted wear damage between the support device and the component. Vibrations in the vehicle, which partly originate from the drivetrain and partly occur when the vehicle is being driven on poor roads, for example, aggravate the wear. This wear, for example, can wear holes in a hose or cause short-circuiting in a cable, which can lead to operating faults or, even worse, to dangerous driving situations.

US5632457, EP0412067, described an example of a similar support device.

One solution to the problem of orienting the support device might be to fasten the support device by means of two fasteners. The support device would then have a predefined orientation. The disadvantage to such a design is that it increases the size of the support device and each support device takes up two holes in the frame. Yet another problem is that even if the support device is oriented as required, undesirable wear can occur between the component and the edge of the support device. Moreover, it is more expensive and takes a longer time to fasten a support device using two fasteners.

Another way of solving the problem described might be to use specially produced fasteners for each fitting position. Since a modern truck may have up to a hundred support devices, such a solution becomes unduly expensive and complicated.

### SUMMARY OF THE INVENTION:

The object of the invention therefore is to provide a support device which increases the error tolerance in the orientation of the support device.

According to the invention this object is achieved by the solution described in the characterizing part of claim 1. The other patent claims contain advantageous developments and further developments of the support device according to the invention.

This first embodiment of the support device according to the invention means that vehicle-specific components, in particular pipes, hoses and cabling, can be fastened to the circumferential surface of the support device in various directions without the risk that the components will be exposed to wear against edge surfaces of the support device. The aim of this is to prevent damage to the components so that vehicle operating faults are avoided. This also increases the tolerance in the orientation of the support device, which simplifies fitting of the support device.

In an advantageous first development of the support device according to the invention the circumferential surface of the support device is circular. The aim of this is to provide a support device which is entirely independent of the orientation and in which components can be fitted in all directions.

In an advantageous second development of the support device according to the invention the support device is provided with notches. The aim of this is to facilitate the fitting of vehicle-specific components, which is done by means of cable ties, for example.

In an advantageous third development of the support device according to the invention the support device is provided with an edge section. The aim of this is to improve the fixing of the components.

### BRIEF DESCRIPTION OF THE DRAWINGS

The invention will be described in more detail below with reference to examples of embodiments shown in the drawings attached, in which
- FIG 1: shows a first advantageous embodiment of the support device according to the invention and
- FIG 2: shows a second advantageous embodiment of the support device according to the invention.

### DESCRIPTION OF THE PREFERRED EMBODIMENTS

The examples of embodiments of the invention and further developments described below must be seen only as examples and in no way limit the scope of the claims. In the examples of embodiments here described the same reference numbers relate to the same type of part in the various figures. For this reason each part is not described in detail in all examples of embodiments.

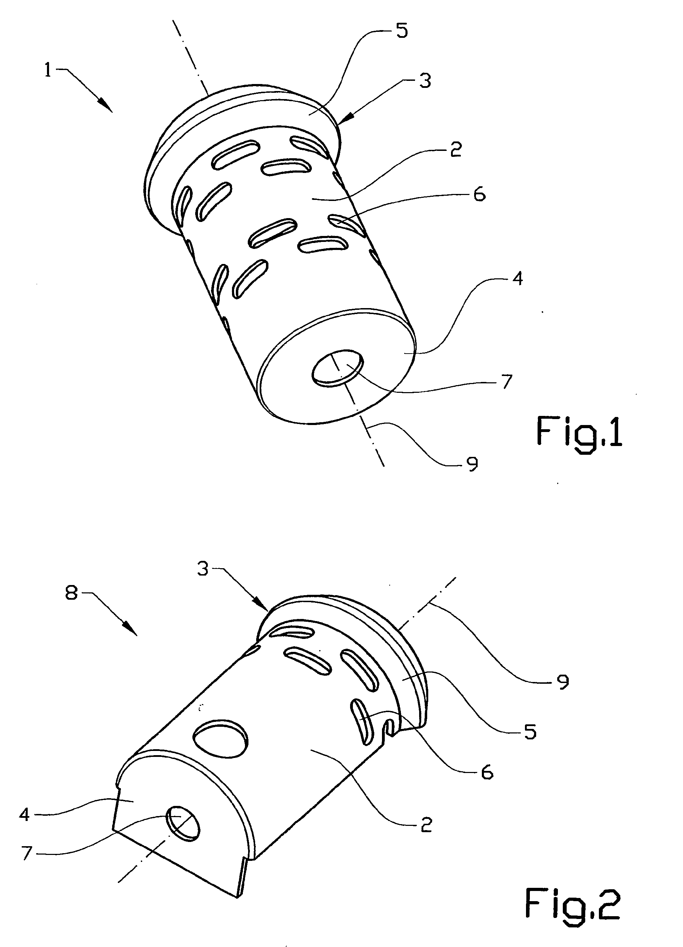

The support device according to the invention is designed as a tubular element, either as a closed tube, as shown in Fig. 1, or as a partially circular tube as shown in Fig. 2. Fig. 1 shows a first example of an embodiment of the support device 1 according to the invention. The support device comprises a circumferential surface 2, an edge section 3, a bottom section 4 and a fitting aperture 7. The transition between the circumferential surface 2 and the edge section 3 comprises a radius 5, adapted to suit the components that are to be fitted. The circumferential surface comprises a number of oval notches 6. The support device has a central axis 9 about which the support device is rotationally symmetrical. When the support device is designed as a closed, tubular element it is advantageous for the support device to be completely circular, although a somewhat elliptical form is feasible.

The support device 1 is adapted for fitting vehicle-specific components, in particular pipes, hoses and cables to a vehicle, in this example to the frame of a truck. These components may be air hoses, hydraulic hoses, cooling pipes or cabling, for example. The cabling consists of cables which are either loose or contained in a soft hose or in a corrugated plastic pipe. When a component is to be fastened to the support device, this is advantageously done by means of a cable tie, which is threaded through a notch 6 and then around the edge of the support device 3. The cable tie is tightened so that the component is drawn against the circumferential surface 2 of the support device. If a plurality of components are to be fastened alongside one another, one or more cable ties may be used.

The dimensions of the support device, for example thickness, length, radius of the circumferential surface etc. are suitably selected. It is important that the support device should fulfil the strength requirements demanded of it. The length is determined, for example, by how many components it will be possible to fit side by side to the support device. The radius of the circumferential surface is determined, for example, by how the support device is to be mounted. If it is mounted by means of a bolt, there must be sufficient space in the support device for the socket that tightens the bolt.

The support device 1 is fastened to the frame of the vehicle with a bolt which is threaded through the fitting aperture 7 in the bottom section 4 of the support device so that the bottom section bears against the frame. The fitting aperture 7 is advantageously centered around the central axis 9 in the bottom section 4, but it is also possible to locate it eccentrically. It is also possible either to fasten the support device by riveting or for the hole to have a threaded section which is adapted to receive a bolt. It is also possible for the bottom section to have a threaded projecting part, for example an integrally cast stud bolt, to which a nut can be fitted.

The component to be fitted to the support device is placed on the support device so that the longitudinal extent of the component runs transversely to the longitudinal extent of the support device, that is to say the component is fitted approximately at right angles to the central axis of the support device. This will be referred to here as the direction of orientation of the component. In this example of an embodiment the longitudinal extent of the support device, that is to say the central axis of the support device, is at right angles to the bottom section 4.

The support device is made from a material suited to the purpose. The choice of material and the dimensioning may be determined by, among other things, the strength requirements. A suitable material may be a plastic material or rubber material. When these materials are compression molded the support device can instantaneously assume its final appearance so that no finishing treatment is required. This may be a cost-effective solution where the support device is mass-produced. Another suitable material is a metal. It is advantageous to proceed from a surface-treated sheet metal which is pre-punched with a number of notches 6 and which is then formed, by a method known in the art, into a tubular support device having an edge section 3 and a bottom section 4 in which the fitting aperture 7 is situated.

The shape of the notches 6 in the circumferential surface is adapted to the fitting devices used. When cable ties are used as fitting device, for example, the notches are therefore elongated in the direction of orientation of the support device, so that the cable tie has a plane contact surface with the support device when it is threaded through the notch. It is also possible to have notches with a number of different shapes on one and the same support device in order to suit various fitting devices. In this example there are multiple rows of notches 6, laterally and diametrically offset in relation to one another, so that regardless of the orientation of the support device there is always a notch 6 that is advantageously positioned in order to be able to fasten the component in question. In certain cases it may be advantageous also to provide the edge section 3 with similar notches.

The circumferential surface may advantageously be provided with grooves (not shown) in the fitting direction of the components. These grooves suitably have a radius which is matched to the components to be fitted. This may be advantageous, for example, where multiple components are fitted to the same support device, so that the components are more easily held in place. The grooves are suitably located between the rows of notches.

The advantage in designing the support device with a circular circumferential surface is that it renders the support device entirely independent of how it is oriented when fitting. When conventional support devices are fitted their orientation is dependent on the fitter fitting them. With the support device according to the invention the orientation of the support device is therefore not dependent on the fitter.

Fig. 2 shows a first development of the support device according to the invention, here denoted by 8. Here the support device 8 is designed with a partially circular circumferential surface 2. This means that the support device 8 can be likened to an angular segment of the tubular support device 1 as described above. Fig. 2 shows a support device 8 in which the angular segment is 180 degrees. The angular segment is advantageously between 30 and 220 degrees. This support device also has a central axis 9 about which the circumferential surface is rotationally symmetrical. It is also possible to make the support device 8 somewhat elliptical.

The aim of this development is to simplify the fitting of vehicle-specific components where multiple components are to be fitted to the same support device 8. If more than two components are to be fitted to the same support device 8 it is advantageous to use at least two cable ties. In order to fasten the inner components the cable tie may need to be threaded through two notches 6, firstly down through a notch 6 and then back up through another notch 6, viewed from the circumferential surface 2, in order to hold the component in place. This is made easier if the support device 8 has a partially circular circumferential surface 2, since the fitter can more easily get to thread the cable tie through the notch 6. It is naturally also possible to thread each of the two cable ties through its own notch 6 and then around the edge 3 of the support device.

This support device 8, too, may be made of a plastic material, rubber material or a metal. When the support device is compression molded the compression molding tool is inexpensive and easy to produce, which means that the unit price of the support device is low. When the support device 8 is made of metal it is advantageous to proceed from a surface-treated sheet metal, which is pre-punched with a number of notches 6 and is then formed, by a method known in the art, into a support device 8 having the desired form. An edge section 3 and a bottom section 4 in which the fitting aperture 7 is situated can be formed at the same time. The bottom section 4 could be bent outwards so that it is situated on the circumferential surface 2 side of the support device 8, but it is, according to the invention, bent inwards so that it is situated on the opposite side of the support device 8 to the circumferential surface 2. The bottom section 4 may also have an angle other than 90 degrees to the circumferential surface 2.

The invention must not be regarded as being limited to the examples of embodiments described above, a number of further variants and modifications being feasible without departing from the scope of the following patent claims. The support device may also be used, for example, for fitting pipes, hoses and cabling in fixed installations where the components need to be fitted in different directions.

## Claims

1. A vehicle cabling support device (1), intended for use in fastening pipes, hoses and cabling to a vehicle,
**characterized in that**
the support device has an essentially linear central axis (9) and that the circumferential surface (2) of the support device is convex and at least partially circular, the said circumferential surface being oriented around the central axis of the support device and that the support device comprises a bottom section (4) for fastening the support device to the vehicle, the bottom section being bent inwards so that it is situated on the opposite side of the support device relative to the circumferential surface (2).

2. The support device as claimed in claim 1,
**characterized in that**
the bottom section (4) is substantially perpendicular to the circumferential surface.

3. The support device as claimed in claim 1 or 2,
**characterized in that**
the partially circular circumferential surface of the support device is between 30 and 220 degrees.

4. The support device as claimed in claim 1 or 2,
**characterized in that**
the circumferential surface (2) of the support device is circular.

5. The support device as claimed in any of claims 1 to 4,
**characterized in that**,
the circumferential surface (2) of the support device is designed with at least one notch (6)

6. The support device as claimed in claim 5,
**characterized in that**
the said minimum of one notch (6) extends further in a transverse direction to the longitudinal extent of the support device than in the longitudinal extent of the support device.

7. The support device as claimed in any of claims 1 to 6,
**characterized in that**
the circumferential surface (2) of the support device is formed with at least one depression or elevation (3) transversely to the longitudinal extent of the support device.

8. The support device as claimed in claim 7,
**characterized in that**
at least one said depression or elevation (3) has a radius adapted to the said pipes, hoses and cabling.

9. The support device as claimed in any of claims 1 to 8,
**characterized in that**
the support device is made of a metal, rubber or plastic material.

10. The support device as claimed in any of claims 1 to 9,
**characterized in that**
the support device is made from a punched and bent metal material.

11. The support device as claimed in any of claims 1 to 10,
**characterized in that**
the support device is made from a molded or compression molded rubber or plastic material.

## Patentansprüche

1. Haltevorrichtung (1) für Fahrzeugverkabelungen, die zur Befestigung von Rohrleitungen, Schläuchen und Verkabelungen an einem Fahrzeug bestimmt ist,
**dadurch gekennzeichnet, dass**
die Haltevorrichtung eine im Wesentlichen lineare Mittelachse (9) aufweist, und dass die Umfangsfläche (2) der Haltevorrichtung konvex und wenigstens teilweise kreisförmig ist, wobei die Umfangsfläche um die Mittelachse der Haltevorrichtung ausgerichtet ist, und dass die Haltevorrichtung einen Bodenabschnitt (4) zur Befestigung der Haltevorrichtung an dem Fahrzeug umfasst, wobei der Bodenabschnitt nach innen gewinkelt ist, so dass er auf der bezüglich der Umfangsfläche (2) entgegengesetzten Seite der Haltevorrichtung liegt.

2. Haltevorrichtung nach Anspruch 1, **dadurch gekennzeichnet, dass** der Bodenabschnitt (4) im Wesentlichen senkrecht zu der Umfangsfläche verläuft.

3. Haltevorrichtung nach Anspruch 1 oder 2, **dadurch gekennzeichnet, dass** die teilweise kreisförmige Umfangsfläche der Haltevorrichtung zwischen 30 und 220 Grad beträgt.

4. Haltevorrichtung nach Anspruch 1 oder 2, **dadurch gekennzeichnet, dass** die Umfangsfläche (2) der Haltevorrichtung kreisförmig ist.

5. Haltevorrichtung nach einem der Ansprüche 1 bis 4, **dadurch gekennzeichnet, dass** die Umfangsfläche (2) der Haltevorrichtung mit wenigstens einer Aussparung (6) versehen ist.

6. Haltevorrichtung nach Anspruch 5, **dadurch gekennzeichnet, dass** sich die wenigstens eine Aussparung (6) in einer Querrichtung zu der Längserstreckung der Haltevorrichtung weiter erstreckt als in der Längserstreckung der Haltevorrichtung.

7. Haltevorrichtung nach einem der Ansprüche 1 bis 6, **dadurch gekennzeichnet, dass** die Umfangsfläche (2) der Haltevorrichtung mit wenigstens einer Vertiefung oder Erhebung (3) ausgebildet ist, die quer zu der Längserstreckung der Haltevorrichtung verläuft.

8. Haltevorrichtung nach Anspruch 7, **dadurch gekennzeichnet, dass** die wenigstens eine Vertiefung oder Erhebung (3) einen Radius aufweist, der an die Rohrleitungen, Schläuche oder Verkabelungen angepasst ist.

9. Haltevorrichtung nach einem der Ansprüche 1 bis 8, **dadurch gekennzeichnet, dass** die Haltevorrichtung aus einem Metall-, Gummi- oder Kunststoffmaterial gebildet ist.

10. Haltevorrichtung nach einem der Ansprüche 1 bis 9, **dadurch gekennzeichnet, dass** die Haltevorrichtung aus einem gestanzten und gebogenen Metallmaterial gebildet ist.

11. Haltevorrichtung nach einem der Ansprüche 1 bis 10, **dadurch gekennzeichnet, dass** die Haltevorrichtung aus einem geformten oder druckverformten Gummi- oder Kunststoffmaterial gebildet ist.

## Revendications

1. Dispositif de support de câblage de véhicule (1), prévu pour être utilisé dans la fixation de tubes, de tuyaux souples et de câblages sur un véhicule,
**caractérisé en ce que**
le dispositif de support a un axe central sensiblement linéaire (9) et **en ce que** la surface circonférentielle (2) du dispositif de support est convexe et au moins partiellement circulaire, ladite surface circonférentielle étant orientée autour de l'axe central du dispositif de support et **en ce que** le dispositif de support comporte un tronçon de fond (4) pour fixer le dispositif de support sur le véhicule, le tronçon de fond étant plié vers l'intérieur de sorte qu'il est situé sur le côté opposé du dispositif de support par rapport à la surface circonférentielle (2).

2. Dispositif de support selon la revendication 1,
**caractérisé en ce que**
le tronçon de fond (4) est sensiblement perpendiculaire à la surface circonférentielle.

3. Dispositif de support selon la revendication 1 ou 2,
**caractérisé en ce que**
la surface circonférentielle partiellement circulaire du dispositif de support est entre 30 et 220 degrés.

4. Dispositif de support selon la revendication 1 ou 2,
**caractérisé en ce que**
la surface circonférentielle (2) du dispositif de support est circulaire.

5. Dispositif de support selon l'une quelconque des revendications 1 à 4,
**caractérisé en ce que**
la surface circonférentielle (2) du dispositif de support est conçue ayant au moins une encoche (6)

6. Dispositif de support selon la revendication 5,
**caractérisé en ce que**
ledit minimum d'une encoche (6) s'étend plus loin dans une direction transversale par rapport à l'étendue longitudinale du dispositif de support que dans l'étendue longitudinale du dispositif de support.

7. Dispositif de support selon l'une quelconque des revendications 1 à 6,
**caractérisé en ce que**
la surface circonférentielle (2) du dispositif de support est formée ayant au moins un creux ou une partie surélevée (3) transversalement à l'étendue longitudinale du dispositif de support.

8. Dispositif de support selon la revendication 7,
**caractérisé en ce que**
ledit au moins un creux ou ladite au moins une partie surélevée (3) a un rayon adapté auxdits tubes, tuyaux souples et câblage.

9. Dispositif de support selon l'une quelconque des revendications 1 à 8,
**caractérisé en ce que**
le dispositif de support est constitué d'un métal, de caoutchouc ou d'une matière plastique.

10. Dispositif de support selon l'une quelconque des revendications 1 à 9,
**caractérisé en ce que**
le dispositif de support est constitué à partir d'un matériau métallique poinçonné et incurvé.

11. Dispositif de support selon l'une quelconque des revendications 1 à 10,
**caractérisé en ce que**
le dispositif de support est constitué à partir d'un caoutchouc, ou d'une matière plastique, moulé ou moulé sous pression.
